# EUROPÄISCHE PATENTSCHRIFT

(11) **EP 0 998 079 B1**
(45) Veröffentlichungstag und Bekanntmachung des Hinweises auf die Patenterteilung: **11.04.2007**
(21) Anmeldenummer: 99121004.8
(22) Anmeldetag: 20.10.1999
(51) Int. Cl.: H04L 12/28, H04L 12/56, H04Q 7/32, H04L 29/06

(54) **Verfahren zum Bereitstellen eines drahtlosen Netzwerkes sowie einer Basisstation für ein derartiges Netz**
Method for providing a wireless network and a base station for such a network
Méthode pour fournir un réseau sans fil et une station de base pour un tel réseau

(30) Priorität: 30.10.1998 DE 19850173
(43) Veröffentlichungstag der Anmeldung: 03.05.2000
(73) Patentinhaber: Aastra DeTeWe GmbH, 10997 Berlin (DE)
(72) Erfinder: Dosch, Franz A., 83026 Rosenheim (DE)

(56) Entgegenhaltungen:
- WO-A-98/17032
- US-A- 5 412 654
- US-A- 5 654 958
- TOH C-K: "ASSOCIATIVITY-BASED ROUTING FOR AD-HOC MOBILE NETWORKS" WIRELESS PERSONAL COMMUNICATIONS, KLUWER ACADEMIC PUBLISHERS, NL, Bd. 4, Nr. 2, 1. März 1997 (1997-03-01), Seiten 103-139, XP000728588 ISSN: 0929-6212
- PIEMONT C: "GEISTREICHE VERBINDUNGEN INTELLIGENTE GERAETE IN DEZENTRALEN NETZEN" CT MAGAZIN FUER COMPUTER TECHNIK, VERLAG HEINZ HEISE GMBH., HANNOVER, DE, Nr. 20, 1998, Seiten 198-202, XP001106236 ISSN: 0724-8679

## Beschreibung

Die vorliegende Erfindung betrifft ein Verfahren zum Bereitstellen eines drahtlosen Netzwerkes.

Lokale Netzwerke, wie beispielsweise LAN-Netze, werden zur Vernetzung mehrerer Computer sowie Peripheriegeräte verwendet. Die Vernetzung erfolgt üblicherweise kabelgebunden, wobei unterschiedliche Netztopologien, wie Bus-, Ring- oder Stemtopologien, Anwendung finden.

Es wurde bereits vorgeschlagen, einzelne Punkt-zu-Punkt-Verbindungen oder die gesamte LAN-Architektur drahtlos, d.h. über Funkanbindungen, zu verwirklichen. Unabhängig von einer drahtgebundenen oder drahtlosen Architektur besteht bei den bekannten Systemen der Nachteil, daß jedes einzelne Gerät, das am Netzwerkbetrieb teilnimmt, aufwendig konfiguriert werden muß, was in der Regel detailliertes technisches Wissen erfordert.

WO 98/17032 A schlägt eine Struktur vor, bei der Netzwerkteilnehmer jeweils eine Detectionzone 28 aufweisen, über die sie andere Teilnehmerstationen, die genügend naheliegen, erkennen können (vgl. Seite 6, Zeile 3). Wird eine derartige andere Teilnehmerstation erkannt, so kann mit dieser eine Verbindung aufgebaut werden. Der Verbindungsaufbau erfolgt somit, vereinfacht ausgedrückt, zufällig mit demjenigen Teilnehmerstationen, die im Bereich der "Detectionzone" liegen. Die Verbindung erfolgt auch in diesem Fall nur dann, wenn eine "Needs and Capabilities Evaluation" ergibt, dass eine derartige Verbindung sinnvoll ist. In Zusammenhang mit Seite 16, Zeilen 5 bis 11 ist ein Betriebsmuster beschrieben, bei dem ein Service Receiving Peer 20 eine Verbindung mit einem Service Providing Peer eingeht und diesem, damit er diesen Dienst anbieten kann, hierzu vorab ein Appliance Control Computer - Programme überträgt. Der Service Providing Peer stellt dann den Dienst unter Anwendung des geladenen Computerprogramms dem Service-Proceeding-Peer zur Verfügung.

Anschließend ein ähnliches System ist darüber hinaus aus US-A-5,412,654 bekannt.

Es ist die Aufgabe der vorliegenden Erfindung, ein Verfahren zum Bereitstellen eines drahtlosen Netzwerkes anzugeben, das in einfacher und flexibler Weise handhabbar ist und im wesentlichen ohne administratorischen Aufwand durch die Benutzer betrieben werden kann.

Diese Aufgabe wird durch den Patentanspruch 1 gelöst.

Bevorzugte Ausführungsformen sind Gegenstand der Unteransprüche.

Ein wesentlicher Aspekt der vorliegenden Erfindung besteht in der Erkenntnis, daß ein Netzwerkbetrieb drahtlos durch Zurverfügungstellen einer Funkzelle mittels einer Basisstation erreicht werden kann, wobei die neu eintretende Netzwerkteilnehmerstationen über entsprechenden Nachrichtenaustausch durch die Basisstation erfaßt werden und die Basisstation das Vorhandensein dieser zusätzlichen Netzwerkresource den übrigen Teilnehmerstationen mitteilt, damit diese Teilnehmerstationen ihrerseits die neue Resource nutzen können. Vorzugsweise überträgt das neu eintretende Gerät die zu seinem Betrieb notwendige Treibersoftware an die Basisstation, die diese Treibersoftware dann an Teilnehmerstationen weiterreicht, die von der neuen Resource Gebrauch machen wollen. Die Übermittlung der Treibersoftware kann dabei im Anschluß an die Anmeldung des neuen Geräts an das Netzwerk erfolgen oder zu dem Zeitpunkt, zu dem von der neuen Teilnehmerstation das erste Mal von einer anderen Teilnehmerstation ein Dienst angefordert wird. Statt die Treibersoftware über die Basisstation zu senden, kann die Treiberstation auch direkt zu der anfordernden Teilnehmerstation übertragen werden.

Vorzugsweise führt jede Teilnehmerstation einen Netzwerkübersichtsplan, d.h. insbesondere einen Resourcenplan, anhand dessen die momentan zur Verfügung stehenden Netzwerkresourcen und Funktionen erkannt werden können. Bei Eintritt einer neuen Resource in das Netzwerk werden die Netzwerkübersichten mittels eines Funkrufes bzw. Resourcen-Boardcast durch die Basisstation entsprechend aktualisiert.

Die Aktualisierung findet auch statt, wenn ein einzelnes Gerät die Funkzelle wieder verläßt oder wenn sich der momentane Funktionsstatus ändert, wie beispielsweise die vorübergehende Unverfügbarkeit eines einzelnen Gerätes.

Der Ein- bzw. Austritt in bzw. aus einer Funkzelle kann durch Bewegen in bzw. aus der Funkzelle passieren oder durch das Ein- bzw. Ausschalten des entsprechenden Gerätes selbst.

Besonders bevorzugterweise wird die Funkzelle durch eine Basisstation entsprechend dem DECT-Standard aufgebaut, und entsprechend weisen die Teilnehmerstationen Funkmodule mit entsprechender Übertragungsprotokoll-Software auf, um mit der Basisstation bzw. mit anderen Teilnehmerstationen gemäß dem DECT-Standard kommunizieren zu können.

Über die so geschaffene Funkanbindung können die Geräte dann Information entsprechend üblicher Netzwerkprotokolle, wie beispielsweise TCP/IP, miteinander austauschen.

Besondere Ausgestaltungen des erfindungsgmäßen Verfahrens sind Gegenstand der Unteransprüche.

Darüber hinaus wird die Aufgabe durch eine Basisstation zur Verwendung in dem genannten Verfahren gelöst entsprechend dem Patentanspruch 20.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1 eine Ausführungsform für eine erfindungsgemäße Basisstation;
Fig. 2 eine illustrative Darstellung der von der Basisstation aufgebauten Funkzelle;
Fig. 3 die Funkzelle gemäß Fig. 2 mit eingetretener Teilnehmerstation;
Fig. 4 eine Ausführungsform eines als PCMCIA-Karte ausgeführten Funkmoduls;
Fig. 5 eine Ausführungsform eines als ISA-Karte oder PCI-Karte ausgeführten Funkmoduls;
Fig. 6 eine schematische Darstellung des Eintritts einer Teilnehmerstation in die Funkzelle;
Fig. 7 eine schematische Darstellung des Aussendens einer Funkrufnachricht der Basisstation;
Fig. 8 eine schematische Darstellung des gleichzeitigen Eintritts zweier neuer Teilnehmerstationen in die Funkzelle;
Fig. 9 eine schematische Darstellung einer Funkrufmeldung durch die Basisstation an die verfügbaren Teilnehmerstationen;
Fig. 10 eine schematische Darstellung einer Dienstanforderung durch eine der Teilnehmerstationen;
Fig. 11 eine schematische Darstellung der Übertragung der notwendigen Kommunikationssoftware von einer der Teilnehmerstationen an eine dienstanfragende Teilnehmerstation;
Fig. 12 eine schematische Darstellung der Ausführung eines angefragten Druckvorgangs;
Fig. 13 eine schematische Darstellung des Austritts einer Teilnehmerstation aus der Funkzelle;
Fig. 14 eine schematische Darstellung der Aussendung eines Funkrufs durch die Basisstation zur Verständigung der übrigen Teilnehmerstationen über den Austritt einer Teilnehmerstation aus der Funkzelle.

Im folgenden werden bevorzugte Ausführungsformen der vorliegenden Erfindung näher erläutert. Dabei wird als zu verwendender Funkstandard der DECT-Standard vorausgesetzt. Diese Einschränkung ist jedoch nur beispielhaft, entsprechend können nahezu beliebige andere Nahbereichsfunkstandards, wie PHS, Bluetooth, HOMERF, CDMA-basierte Funksysteme etc., Verwendung finden. Darüber hinaus ist stets eine spezielle Basisstation gezeigt, die jedoch auch durch einen entsprechend konfigurierten Computer ersetzt werden kann. Ein derartiger Computer muß über ein entsprechendes Funkmodul verfügen, mit dem eine Zelle aufgebaut werden kann und darüber hinaus über die entsprechende Protokoll-Software, um die Aufgaben einer Basisstation zu übernehmen.

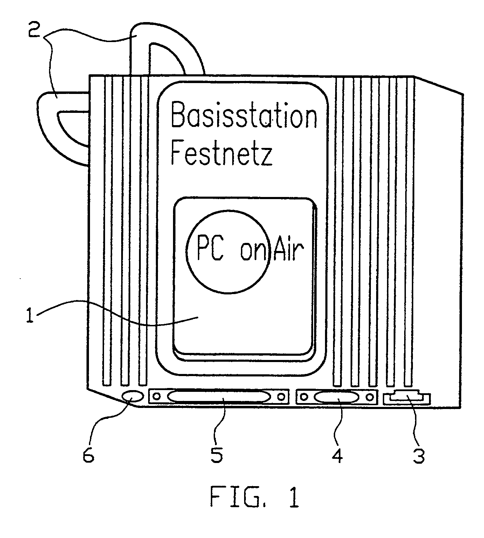

Fig. 1 zeigt eine Baisstation 1, die beispielsweise an der Wand eines Büros angebracht werden kann. Die Basisstation baut über ein Antennensystem 2 eine Funkzelle auf, vorzugsweise entsprechend einem digitalen Standard und besonders bevorzugterweise entsprechend dem DECT-Standard. Darüber hinaus weist die Basisstation vorzugsweise einen ISDN-Anschluß 3 zur kabelgebundenen Anbindung an ein ISDN-Netz auf, fernen einen seriellen Datenport 4 sowie einen parallelen Datenport 5. Zur Leistungsversorgung ist weiterhin ein Anschluß 6 für ein Steckernetzteil vorgesehen.

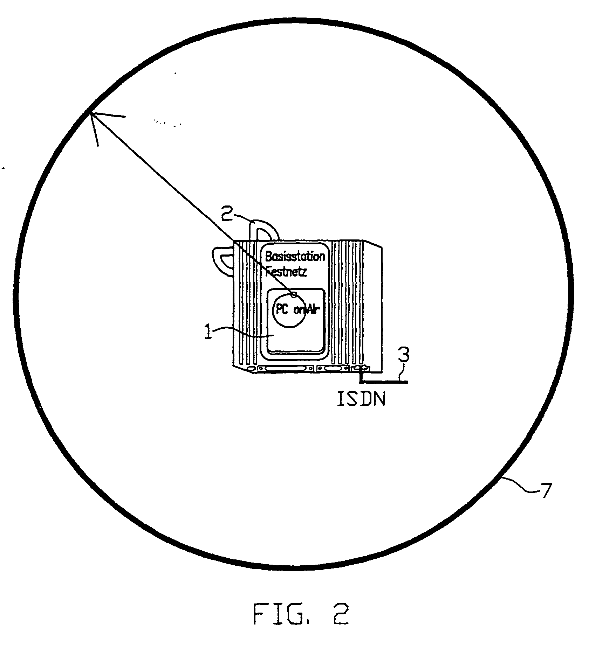

Fig. 2 zeigt in schematischer Weise die Basisstation 1 mit angedeuteter Funkzelle 7. Typische Reichweiten bei Verwendung des DECT-Standards sind Radien von etwa 50 Metern innerhalb von Gebäuden.

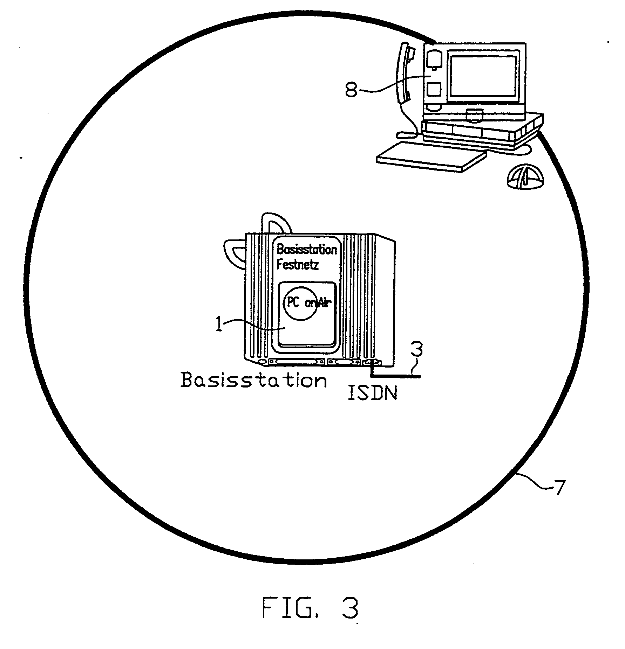

Fig. 3 verdeutlicht, wie die Basisstation 1 mit einer Teilnehmerstation oder Mobilstation 8, bei der es sich beispielsweise um einen Desktop- oder Laptop-Computer handeln kann, innerhalb der Funkzelle 7 in Kommunikation steht. Wie bereits erwähnt, ist die Basisstation 1 über diesen ISDN-Anschluß 3 vorzugsweise an ein ISDN-Festnetz angebunden, so daß eine leistungsfähige Anbindung des Funknetzes an ein Festnetz gewährleistet ist.

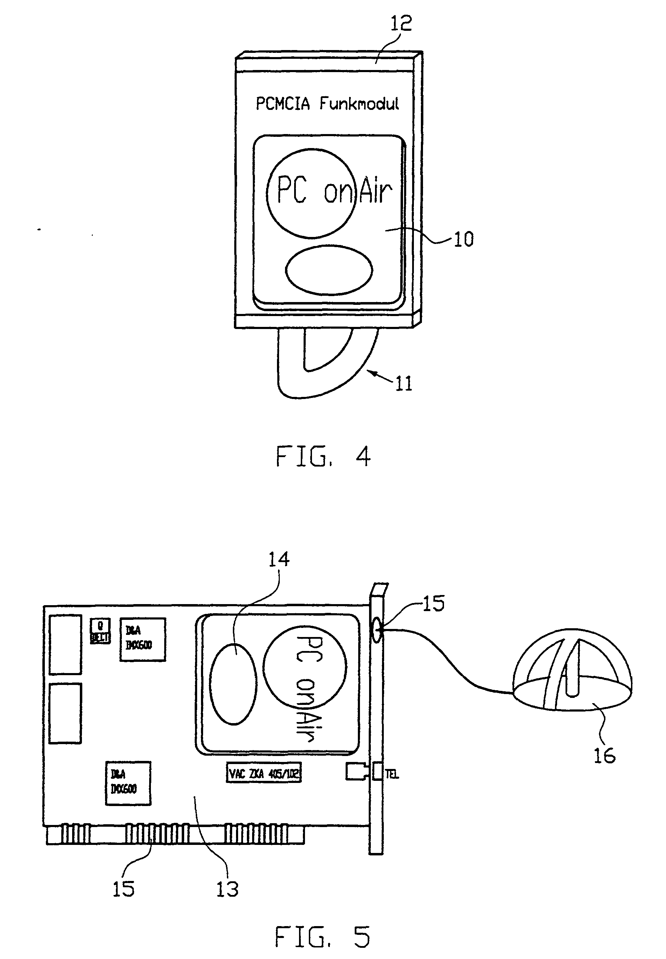

Teilnehmerstationen, die aus Notebooks oder Laptops bestehen, verfügen vorzugsweise über eine eingesteckte PCMCIA-Karte 10, die in Fig. 4 gezeigt ist. Die PCMCIA-Karte dient als Funkmodul und weist entsprechend eine Antenne 11 sowie einen PCMCIA-Steckverbinder 12 auf. Nach Einstecken der Karte 10 in den Laptop und Installieren geeigneter Software auf den Laptop ist der Laptop in der Lage, an dem Funkbetrieb innerhalb der Funkzelle teilzunehmen.

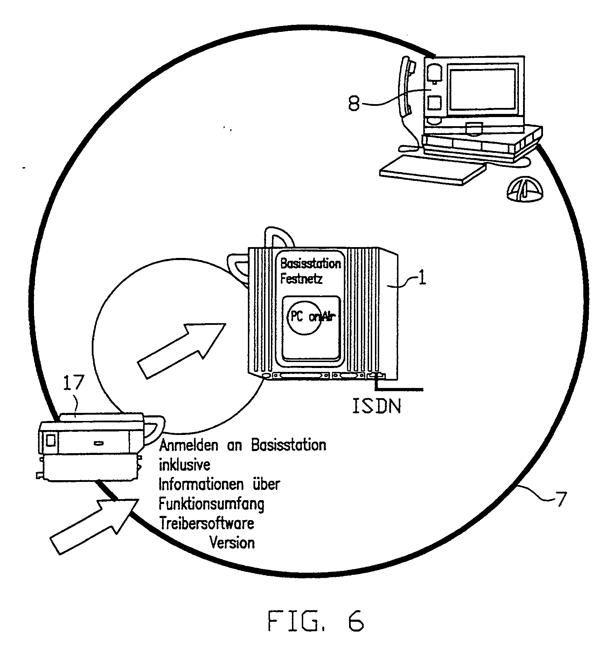

Bei Teilnehmerstationen, die als Desktop-Computer ausgebildet sind, besteht das notwendige Funkmodul vorzugsweise aus einer ISA-Karte oder PCI-Karte 13, die in Fig. 5 gezeigt ist. Die Karte 13 weist als zentralen Bestandteil ein HF-Sende/Empfangsmodul 14 sowie einen ISA- bzw. PCI-Anschluß 15 zur Verbindung mit dem Bussystem des Computers auf. Darüber hinaus weist die Karte einen Anschluß 15 zum Anschließen einer vorzugsweise extern vom Computer aufgestellten Antenne 16 auf.

Obwohl bisher stets nur von einer Funkzelle ausgegangen wurde, sollte klar sein, daß eine besondere Anmeldung der vorliegenden Erfindung in Mehrbereichsfunkzellen zu sehen ist, die über ein Mobility-Management miteinander kommunizieren und somit einen wesentlich größeren Bereich abdecken können. Teilnehmerstationen, die sich von einer Funkzelle in die andere bewegen bzw. transportiert werden, werden im Sinne eines "handover" von der ersten Zelle an die nachfolgende Zelle weitergegeben und von der neuen Zelle entsprechend verwaltet.

Anhand der Fig. 6 bis 14 werden bevorzugte Details des erfindunsgemäßen Verfahrens zur Bereitstellung eines drahtlosen Netzwerkes erläutert.

Fig. 6 illustriert den Eintritt einer neuen Teilnehmerstation 17 in die Funkzelle 7 der Basisstation 1. Bei der Teilnehmerstation 17 handelt es sich beispielsweise um einen Laserdrucker. Beim Eintritt in in die Funkzelle 7 sendet die neu eintretende Teilnehmerstation 17 eine Anmeldungsnachricht an die Basisstation 1, mit der eine Teilnahme am Netzwerkbetrieb angefragt wird. Diese Anmeldenachricht umfaßt vorzugsweise bereits Informationen über den Funktionsumfang über die Treibersoftware sowie die Versionsnummer des anfragenden Geräts.

Neu eintretende Teilnehmerstationen können die entsprechende Anmeldungsnachricht entweder spontan oder in Antwort auf ein entsprechendes Aufforderungssignal durch die Basisstation senden.

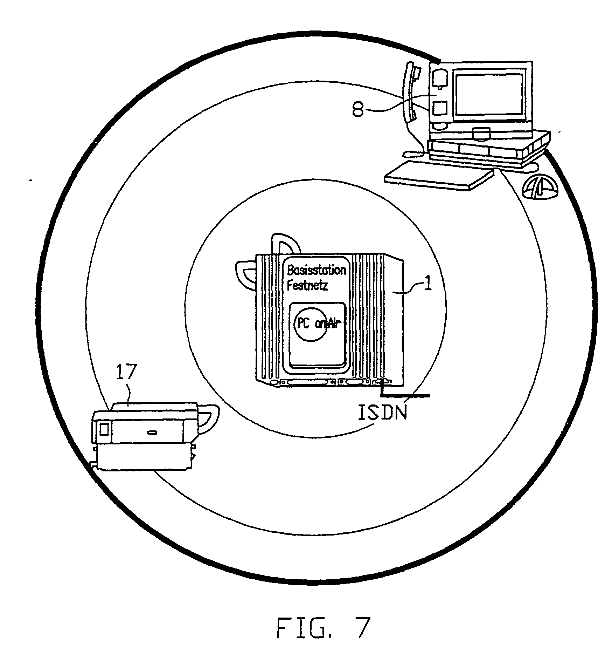

Fig. 7 illustriert die darauffolgende Aktion der Basisstation 1, nämlich das Aussenden einer Funkrufnachricht bzw. Resourcen-Broadcast an die bereits in der Zelle registrierten Teilnehmerstationen, im gezeigten Fall an die Teilnehmerstation 8, und vorzugsweise bereits an die neue Teilnehmerstation 17. Diese Funkrufnachricht aktualisiert eine in den Teilnehmerstationen gespeicherte Netzwerkübersicht, die insbesondere aus einem Resourcenplan bestehen kann. Anhand des Resourcenplans sind vorzugsweise die derzeit zur Verfügung stehenden Netzwerkteilnehmerstationen sowie deren Funktionsausstattung und aktuelle Betriebsstation ablesbar. Vorzugsweise sendet die Basisstation 1 nicht nur beim Eintritt einer neuen Netzwerkteilnehmerstation in die Zelle eine entsprechende Aktualisierung an die übrigen Teilnehmerstationen, sondern auch bei jeder Funktionszustandsänderung eines einzelnen Gerätes sowie beim Abmelden einer Teilnehmerstation aus der Zelle.

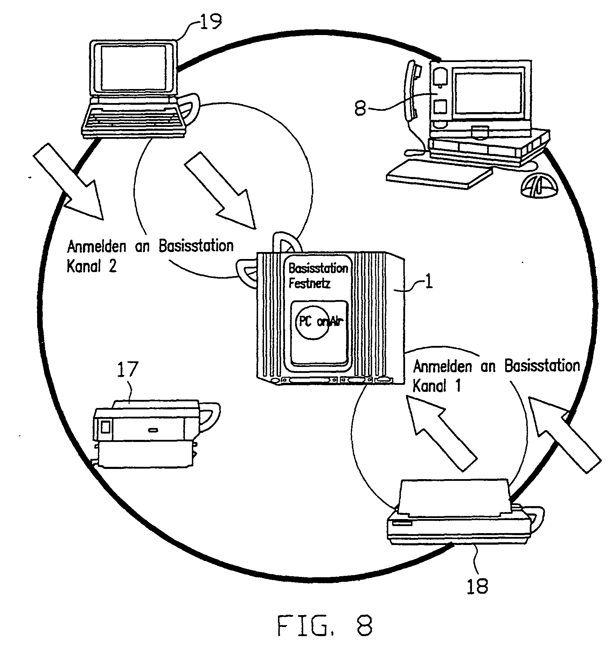

Fig. 8 illustriert das Anmelden zweier weiterer Teilnehmerstationen 18 und 19, wobei es sich bei der einen um einen Drucker und bei der anderen um ein Notebook handelt. Die Anmeldung kann dabei gleichzeitig über zwei oder mehrere unabhängige Kanäle erfolgen, wodurch Konflikte und Wartezeiten vermieden werden. Vorzugsweise teilt die Basisstation die zur Verfügung stehenden Kanäle für die Anmeldung interessierten Teilnehmerstationen vorher mit.

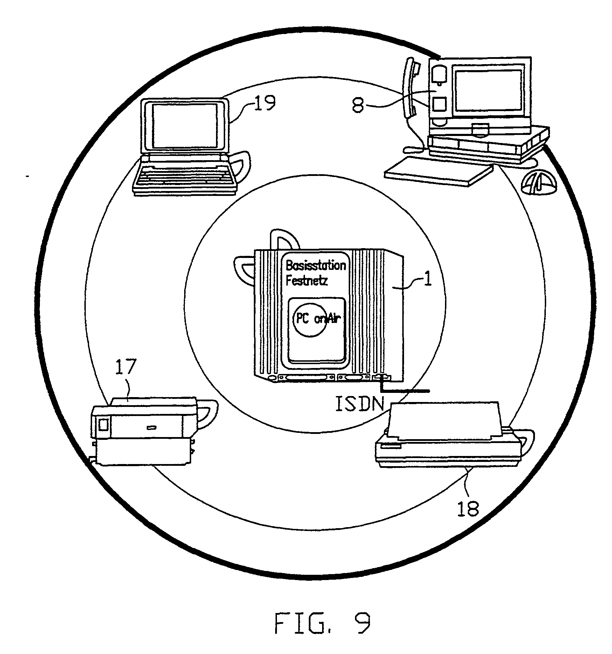

Fig. 9 illustriert das darauffolgende Aussenden einer Funkrufnachricht an alle Teilnehmerstationen, um diese über die aktuell zur Verfügung stehenden Resourcen zu informieren. Die gesendete Funkrufnachricht an die Teilnehmerstationen läßt sich treffend mit dem Begriff Resourcen-Broadcast beschreiben.

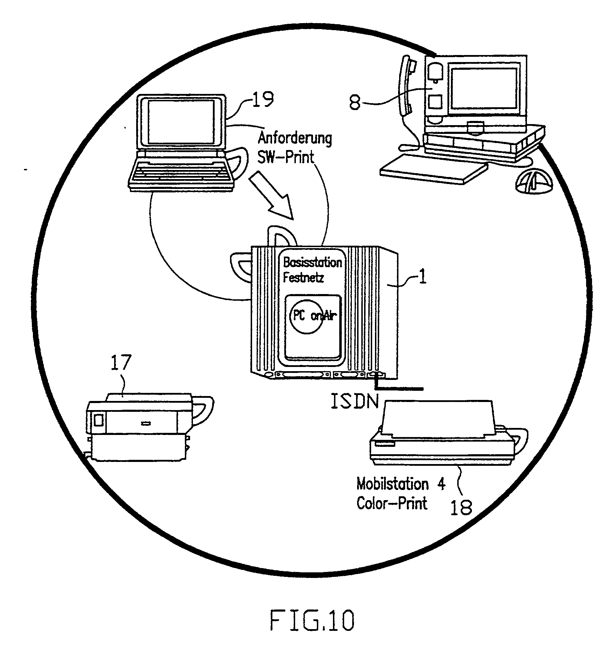

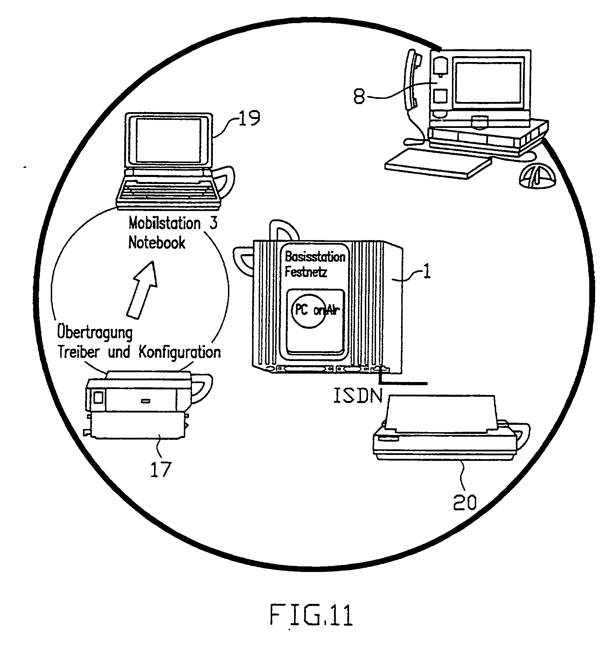

Fig. 10 illustriert die Anforderung eines Dienstes durch das Notebook 19 an die Basisstation 1. Diese Anforderung umfaßt beispielhaft die Anforderung eines Dienstes des Laserdruckers 17. Die Basisstation 1 unterrichtet den Laserdrucker 17 über diese Anforderung, worauf der Laserdrucker 17 die zur Nutzung seiner Dienste notwendige Kommunikationssoftware, insbesondere Treibersoftware und Konfigurationsinformation, an die Teilnehmerstation 19 überträgt, wie in Fig. 11 angedeutet. Statt die Kommunikationssoftware direkt an die anfragende Teilnehmerstation zu übertragen, kann diese auch zentral zur Basisstation weitergereicht werden, um von dort an die anfragende Station übermittelt zu werden. Der Zeitpunkt der Übermittlung der Kommunikationssoftware kann mit dem Zeitpunkt der Anmeldung der entsprechenden Teilnehmerstation in der Funkzelle zusammenfallen oder kann, wie angedeutet, erst zu dem Zeitpunkt erfolgen, zu dem das erste Mal ein Dienst von der entsprechenden Teilnehmerstation angefragt wird. Die entsprechende Kommunikationssoftware der einzelnen Teilnehmerstationen kann auch zentral in der Basisstation gespeichert werden, und die entsprechende Kommunikationssoftware kann dann auf Anfrage der oder den dienstanfragenden Teilnehmerstationen übermittelt werden.

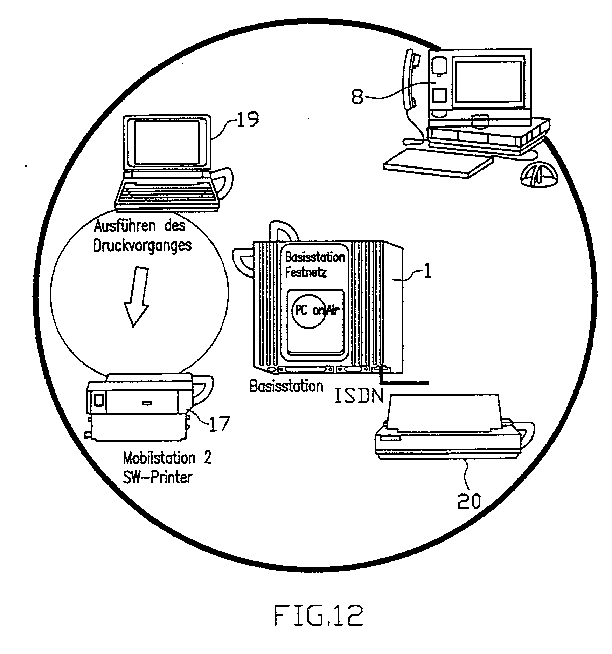

Fig. 12 illustriert die Ausführung des von der Teilnehmerstation 19 angefragten Dienstes durch die Teilnehmerstation 17, d.h. das Ausführen eines Druck-Jobs durch den Laserdrucker 17, der von dem Notebook 19 angefragt wurde. In Fig. 12 ist die Kommunikation zwischen den Stationen 19 und 17 als direkt illustriert, alternativ kann die Kommunikation über Zwischenschaltung der Basisstation 1 erfolgen.

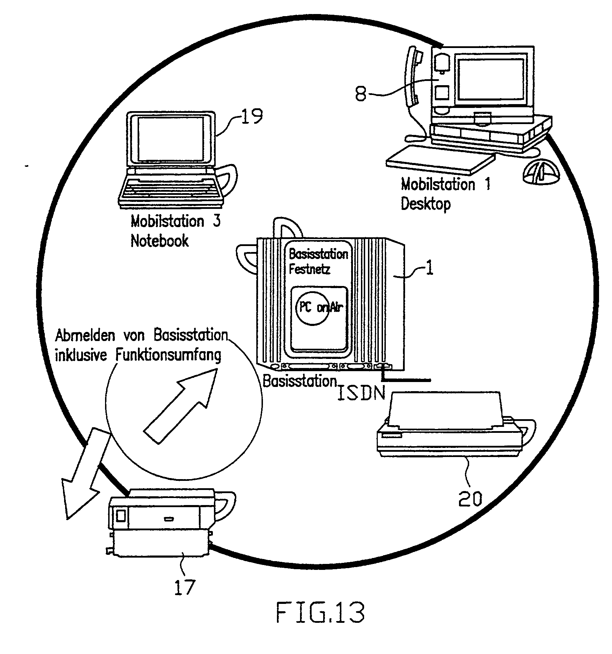

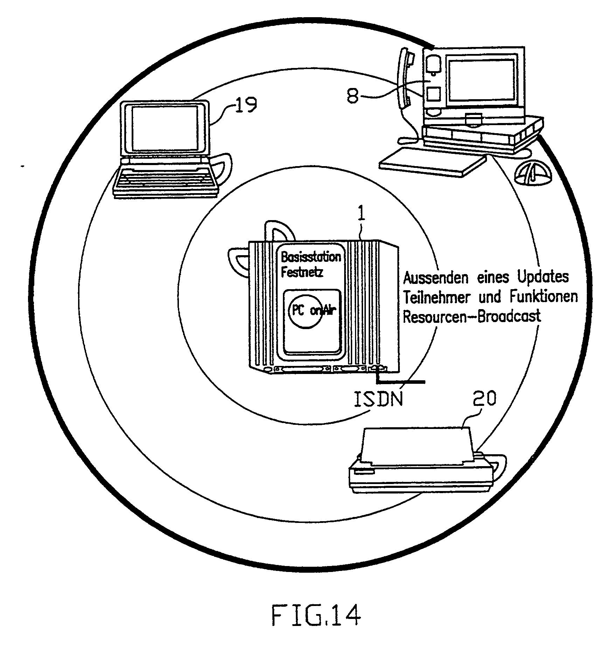

Fig. 13 illustriert den Austritt einer Teilnehmerstation, in diesem Fall der Teilnehmerstation 17, aus dem drahtlosen Netzwerk. Wie oben erwähnt, meldet sich die ausscheidende Teilnehmerstation mittels einer entsprechenden Nachricht von der Basisstation 1 ab, wobei die entsprechende Meldung an die Basisstation vorzugsweise auch den Funktionsumfang mit angibt, der zukünftig nicht mehr zur Verfügung steht. Im Anschluß an das Abmelden teilt die Basisstation 1 entsprechend Fig. 14 wiederum über eine Funkrufnachricht bzw. Resourcen-Broadcast den verbleibenden Teilnehmerstationen den neuen Resourcenzustand mit. Die verbleibenden Teilnehmerstationen können daraufhin ihre lokalen Netzwerkübersichten bzw. Resourcenpläne entsprechend aktualisieren und sind somit in Kenntnis gesetzt, daß die von dem Laserdrucker 17 zur Verfügung gestellten Funktionen zukünftig nicht mehr verfügbar sind.

Als Teilnehmerstationen kommen neben den bereits genannten Geräten Drucker, PC, Laptop, auch Geräte, wie Scanner, Fax, Kamera, Fernsehempfänger, Set-Top-Boxen, Steuermodule, Mobiltelefone, Router ect. in Frage. Jedes dieser Geräte muß zur Teilnahme an dem Netzwerkbetrieb über ein entsprechendes Funkmodul und entsprechende Protokollsoftware verfügen. Vorzugsweise pollt die Basisstation zyklisch alle Teilnehmerstationen und aktualisiert evtl. Änderungen der Funktionszustände (z.B. Drucker ohne Papier). Diese zyklische Abfrage ist optional und kann durch aktive Meldungen (Interrupts, Status-Update) der Teilnehmerstationen an die Basisstation ersetzt werden. Das Übertragen der im Netzwerk aktuell verfügbaren Funktionen und Dienste kann durch zyklischen Broadcast der Basisstation bzw. der Basisstationen oder durch zyklisches Pollen durch die Teilnehmerstationen durchgeführt werden. Das Dienste- und Funktionsreservoir einer Funkzelle wird folglich dynamisch durch die aktiven Teilnehmerstationen und deren unterschiedlichen Funktionen und Eigenschaften sowie durch die Grundfunktionen der Basisstation bzw. der Basisstationen selbst bestimmt und von der versorgenden Basisstation zentral verwaltet und kommuniziert.

Die Basisstation verfügt somit vorzugsweise über Einrichtungen zum Empfangen und Senden von Signalen in dem verwendeten Funkstandard, Einrichtungen zum Auswerten empfangener Signale zum Erkennen eintretender, austretender und sich in ihrem Funktionszustand ändernder Teilnehmerstationen, Einrichtungen zum Erzeugen und Aussenden von Funkrufnachrichten in Antwort auf das Erkennen des Eintretens, Austretens oder sich Veränderns einer Teilnehmerstation und zum Informieren der übrigen Teilnehmerstationen über die Zustandsveränderung. Vorzugsweise weist die Basisstation ferner Einrichtungen zum zyklischen Erzeugen von Abfragesignalen auf, durch die die Teilnehmerstationen veranlaßt werden, ihren aktuellen Zustand an die Basisstation zu melden. Darüber hinaus weist die Basisstation vorzugsweise Einrichtungen zum Umsetzen der über Funk empfangenen Signale in einen anderen Übertragungsstandard, vorzugsweise den ISDN-Standard, auf, um eine Anbindung einzelner Geräte an ein Festnetz zu gewährleisten. Vorzugsweise weist die Basisstation ferner Speichereinrichtungen zum Speichern eines Übersichts- bzw. eines Resourcenplans über die vorhandenen Geräte und ihren Funktionen sowie Zustände auf.

Die mit der Basisstation ein System bildenden Teilnehmerstationen verfügen jeweils über ein Funkmodul sowie entsprechende Protokollsoftware zur Teilnahme an dem Funkbetrieb mit der Basisstation. Die entsprechenden Funkmodule sind in der Lage, Anfragen der Basisstation zu erkennen und zu beantworten. Insbesondere werden Statusanfragen der Basisstation erkannt und mit einer Funktionsmeldung quittiert. Darüber hinaus können Funkrufmeldungen der Basisstation erkannt und von lokal gespeicherten Netzwerkübersichten verwendet werden. Die Teilnehmerstationen weisen ferner Einrichtungen zur Umsetzung von lokal geführten Netzwerkübersichten in Darstellungen auf einer Bildschirmeinrichtung auf. Vorzugsweise weisen die Teilnehmerstationen darüber hinaus Einrichtungen zum automatischen Erkennen des Eintritts in eine Funkzelle auf sowie Einrichtungen zum Absenden einer Anmeldenachricht in Antwort auf das Erkennen des Eintritts in eine Funkzelle. Darüber hinaus weisen die Teilnehmerstationen vorzugsweise Einrichtungen zum Übertragen von Kommunikationssoftware, vorzugsweise selbstinstallierender Treibersoftware und Konfigurationsinformation, an die Basisstation bzw. zu einer dienstanfragenden Teilnehmerstation auf.

Sowohl Basisstation(en) als auch Teilnehmerstationen weisen Einrichtungen zum Datenausdruck untereinander entsprechend einem Netzwerkprotokoll, vorzugsweise TCP/IP, auf. Diese Protokollinformation wird durch den gewählten Funkprotokollstandard transportiert.

Mit der vorliegenden Erfindung wird somit ein drahtloses Netzwerk zur Verfügung gestellt, bei dem die einzelnen Teilnehmerstationen spontan gemäß einer bestimmten Netzwerkarchitektur, z.B. einer LAN-Architektur, miteinander verbunden sind und ad-hoc-konfiguriert sind. Der Benutzer wird somit nicht mit administratorischen Aufgaben belastet. Neu eintretende Geräte werden automatisch in das Netz integriert und austretende Geräte automatisch entfernt. Die notwendige Konfigurierung erfolgt ebenfalls automatisch durch Übertragen der notwendigen Kommunikationssoftware an die anfragenden Teilnehmerstationen. Vorzugsweise sind die übertragenen Treiber selbstinstallierend.

Vorzugsweise weisen alle Teilnehmerstationen, zumindest jedoch die vorhandenen Computereinrichtungen, Programme auf, die eine bildliche Darstellung der im Netzwerkbetrieb zur Verfügung stehenden Geräte bzw. Funktionen ermöglichen. Vorzugsweise wird dies über entsprechende Ikons ermöglicht, wobei bei Anmeldung eines neuen Geräts in dem Netzwerkverbund ein entsprechendes Ikon hinzugefügt wird und bei Austritt eines Geräts das entsprechende Ikon wieder gelöscht wird. Auch Änderungen des Funktionszustandes eines bestimmten Geräts können automatisch in der dargestellten Übersicht erfaßt werden, beispielsweise eine Warnung, daß der Papiervorrat eines Druckers erschöpft ist oder daß die Druckerpatrone auszuwechseln ist.

Die einzelnen Teilnehmerstationen können sich in einem Sleep-Modus (Sparmodus, Economymodus) befinden und jederzeit von der Basisstation oder von einer anderen Teilnehmerstation durch einen Wake-Up-Call (Aktivierungsruf) wieder in aktiven Zustand versetzt werden. Wie erwähnt, können die Treiber direkt von der angefragten Teilnehmerstation an die anfragende Teilnehmerstation übermittelt werden. Möglich ist jedoch auch die Übermittlung zunächst an die Basisstation, von der aus die entsprechende Treibersoftware dann mittels einer Broadcast-Meldung an alle Teilnehmerstationen, die prinzipiell für die Nutzung dieses Dienstes in Frage kommen, verschickt wird.

## Patentansprüche

1. Verfahren zum Bereitstellen eines drahtlosen Netzwerkes zur Verbindung mehrerer Teilnehmerstationen (8), mit folgenden Schritten:
Bereitstellen einer Nahbereichsfunkzelle mittels einer Basisstation (1),
Aussenden von Anmeldungsnachrichten an die Basisstation (1) durch Teilnehmerstationen, die neu in die Funkzelle eintreten,
Aussenden einer Funkrufnachricht von der Basisstation (1) an bereits angemeldete Teilnehmerstationen(8) in Antwort auf den Empfang einer Anmeldungsnachricht oder Abmeldungsnachricht und zum Anpassen von lokal in den Teilnehmerstationen gespeicherten Netzwerkteilnehmerübersichten,
Übertragen von Kommunikationssoftware, vorzugsweise Treibersoftware, von einer neu angemeldeten Teilnehmerstation an vorher angemeldete Teilnehmerstationen (8), die die Dienste der neu angemeldeten Teilnehmerstation (8) nutzen möchten, wobei das Übertragen mit oder ohne Zwischenvermittlung durch die Basisstation (1) erfolgt,
wobei die Basisstation einen Ressourcenplan mit Diensteübersicht aller Teilnehmerstationen enthält und die Diensteübersicht mittels eines Ressourcenbroadcast an alle Teilnehmerstationen dann aussendet, wenn der Ressourcenplan der Basisstation (1) verändert wird.

2. Verfahren nach Anspruch 1, **dadurch gekennzeichnet, dass** die Basisstation eine DECT-Funkzelle zur Verfügung stellt.

3. Verfahren nach Anspruch 1, **dadurch gekennzeichnet, dass** die Basisstation eine Funkzelle gemäß dem Blue Tooth oder PHS-Standard zur Verfügung stellt.

4. Verfahren nach einem der vorhergehenden Ansprüche, **dadurch gekennzeichnet, dass** mehrere Basisstationen (1) vorgesehen sind.

5. Verfahren nach einem der vorhergehenden Ansprüche, **dadurch gekennzeichnet, dass** die Basisstation (1) und die angemeldeten Teilnehmerstationen (8) mittels einer LAN-Architektur vorzugsweise unter Verwendung des TCP/IP-Protokolls in Verbindung stehen.

6. Verfahren nach einem der vorhergehenden Ansprüche, **dadurch gekennzeichnet, dass** der Ressourcenplan auch die Funktionen der Basisstation (1) abbildet, wobei die Funktionen der Basisstation (1) vorzugsweise eine ISDN-Router-Funktion sowie eine LAN-Anschlussfunktion umfassen.

7. Verfahren nach einem der vorhergehenden Ansprüche, **dadurch gekennzeichnet, dass** als Teilnehmerstation eines oder mehrere der folgenden Geräte in Frage kommen:
PC, Drucker, Scanner, Faxgerät, Kamera, Fernsehempfänger, Set-up-Box, Steuermodul, Mobiltelefon, Router.

8. Verfahren nach einem der vorhergehenden Ansprüche, **dadurch gekennzeichnet, dass** die Teilnehmerstationen jeweils mit einem Funkmodul (14, 12) einschließlich dem für den verwendeten Nahbereichsfunkstandard notwendigem Übertragungsprotokoll ausgestattet sind.

9. Verfahren nach einem der vorhergehenden Ansprüche, **dadurch gekennzeichnet, dass** die Basisstation durch einen PC mit eingebautem Funkmodul (14) sowie entsprechender Übertragungsprotokollsoftware gebildet wird.

10. Verfahren nach einem der vorhergehenden Ansprüche, **dadurch gekennzeichnet, dass** die Anmeldenachricht Informationen über Kommunikationseinrichtungen und Funktionen einschließlich der Versionsnummer der sendenden Teilnehmerstation enthält.

11. Verfahren nach einem der vorhergehenden Ansprüche, **dadurch gekennzeichnet, dass** in den Teilnehmerstationen, basierend auf der Netzwerkteilnehmerübersicht bzw. dem Ressourcenplan, Ikons auf einer Bildschirmeinrichtung zur Anzeige gebracht werden, durch die die Netzwerkressourcen symbolisiert werden.

12. Verfahren nach einem der vorhergehenden Ansprüche, **dadurch gekennzeichnet, dass** die Teilnehmerstationen Änderungen ihres Funktionsstatus an die Basisstation melden und die Basisstation mittels einer Funkrufnachricht die entsprechende Funktionsänderungen an die übrigen Teilnehmerstationen zur Anpassung des Ressourcenplanes übermittelt.

13. Verfahren nach einem der vorhergehenden Ansprüche, **dadurch gekennzeichnet, dass** die Basisstation das Austreten einzelner Teilnehmerstationen aus der Funkzelle überwacht und diese Änderungen den übrigen Teilnehmerstationen mitteilt.

14. Verfahren nach einem der vorhergehenden Ansprüche, **dadurch gekennzeichnet, dass** die Teilnehmerstationen in einen Sleep-Modus eintreten können und von der Basisstation oder von einer anderen Teilnehmerstation durch einen Aktivierungsruf wieder in den aktiven Zustand versetzt werden können.

15. Verfahren nach einem der vorhergehenden Ansprüche, **dadurch gekennzeichnet, dass** die von einer Teilnehmerstation übertragene Treibersoftware selbstinstallierend ist.

16. Verfahren nach einem der vorhergehenden Ansprüche, **dadurch gekennzeichnet, dass** eine Änderung der Funktionszustände der Teilnehmerstationen durch zyklisches Abfragen der Teilnehmerstation durch die Basisstation oder durch aktive Meldungen der Teilnehmerstationen an die Basisstation registriert werden.

17. Verfahren nach einem der vorhergehenden Ansprüche, **dadurch gekennzeichnet, dass** das Übertragen von Kommunikationssoftware von einer neu angemeldeten Teilnehmerstation bei erstmaliger Anforderung des entsprechenden Dienstes an die dienstanfordemde Teilnehmerstation gesendet wird.

## Claims

1. A method for providing a wireless network for connecting a plurality of participating stations (8), comprising the following steps:
providing a close-up range radio cell by a base station (1),
transmitting of registration messages to the base station (1) by the participating stations which newly enter the radio cell,
transmitting of a radio paging message from the base station (1) to the already registered participating stations (8) in response to the receiving of a registration message or deregistration message and for adjusting overviews of network participants stored at the participating stations,
forwarding communication software, preferably driver software, from a newly registered participating station to a prior registered participating station (8) which would like to use the services of the newly registered participating station (8), wherein the forwarding is done with or without intermediate switching of the base station (1),
wherein the base station contains a resource plan with an overview of services of all participating stations and transmits the overview of services by a resource broadcast to all participating stations in case the resource plan of the base station (1) is changed.

2. The method according to claim 1, **characterized in that** the base station provides a DECT radio cell.

3. The method according to claim 1, **characterized in that** the base station provides a radio cell according to the Bluetooth or PHS-standard.

4. The method according to one of the preceding claims, **characterized in that** a plurality of base stations (1) is provided.

5. The method according to one of the preceding claims, **characterized in that** the base station (1) and the registered participating stations (8) are connected via a LAN-architecture, preferably by using the TCP/IP-protocol.

6. The method according to one of the preceding claims, **characterized in that** the resource plan maps also the functions of the base station (1), wherein the functions of the base station (1) comprise preferably an ISDN-router-function as well as a LAN-connector function.

7. The method according to one of the preceding claims, **characterized in that** as participating stations one of the following devices can be considered:
PC, printer, scanner, fax machine, camera, TV receiver, set-up box, control module, mobile telephone, router.

8. The method according to one of the preceding claims, **characterized in that** the participating stations are each equipped with a radio module (14, 12) including the necessary transmission protocol for the used close-up range radio standard.

9. The method according to one of the preceding claims, **characterized in that** the base station is constituted by a PC having installed a radio module (14) as well as the corresponding transmission protocol software.

10. The method according to one of the preceding claims, **characterized in that** the registration message comprises information about communication means and functionalities including the version number of the sending participating station.

11. The method according to one of the preceding claims, **characterized in that** in the participating stations, based on the overview over the network participants and resource plan respectively, icons are displayed on display means by which the network resources are symbolized.

12. The method according to one of the preceding claims, **characterized in that** the participating stations announce changes in their function status to the base station and the base station forwards the corresponding changes of functions by way of a radio paging message to the remaining participating stations in order to adjust the resource plans.

13. The method according to one of the preceding claims, **characterized in that** the base station controls the resigning of single participating stations from the radio cell and announces these changes to the remaining participating stations.

14. The method according to one of the preceding claims, **characterized in that** the participating stations may enter into a sleep-mode and may be put back into an active state by an activation call from the base station or one of the other participating stations.

15. The method according to one of the preceding claims, **characterized in that** the driver software forwarded from one of the participating stations is self-installing.

16. The method according to one of the preceding claims, **characterized in that** a change of the function state of the participating stations is registered by the base station through periodically polling the participating stations or through active notifications of the participating stations to the base station.

17. The method according to one of the preceding claims, **characterized in that** the forwarding of the communication software from a newly registered participating station is done at the initial request of the corresponding service to the service requesting participating station.

## Revendications

1. Procédé d'initialisation d'un réseau sans fil reliant plusieurs stations d'utilisateur (8), ladite méthode comprenant les étapes suivantes :
initialisation d'une cellule radio à courte portée au moyen d'une station de base (1),
émission de messages d'enregistrement à la station de base (1) par des stations d'utilisateur qui entrent nouvellement dans la cellule,
émission d'un message de pager de la station de base (1) à des stations d'utilisateur (8) déjà enregistrées en réponse à la réception d'un message d'enregistrement ou de désenregistrement et pour actualiser des vues d'ensemble sur les utilisateurs du réseau sauvegardées localement dans les stations d'utilisateur,
transmission d'un logiciel de communication, de préférence un logiciel gestionnaire, d'une station d'utilisateur nouvellement enregistrée vers des stations d'utilisateur enregistrées auparavant, qui désirent utiliser les services de la station d'utilisateur (8) nouvellement enregistrée, la transmission étant effectuée avec ou sans médiation par la station de base (1),
la station de base contenant un plan de ressources avec une vue d'ensemble des services de toutes les stations d'utilisateur et émettant la vue d'ensemble des services au moyen d'une émission de ressources à toutes les stations d'utilisateur lorsque le plan de ressources de la station de base (1) est modifié.

2. Procédé selon la revendication 1, **caractérisée en ce que** la station de base fournit une cellule DECT.

3. Procédé selon la revendication 1, **caractérisée en ce que** la station de base fournit une cellule suivant le standard Blue Tooth ou PHS.

4. Procédé selon l'une des revendications précédentes, **caractérisée en ce que** plusieurs stations de base (1) sont prévues.

5. Procédé selon l'une des revendications précédentes, **caractérisée en ce que** la station de base (1) et les stations de base (8) enregistrées sont connectées au moyen d'une architecture LAN, de préférence utilisant le protocole TCP/IP.

6. Procédé selon l'une des revendications précédentes, **caractérisée en ce que** le plan de ressources représente aussi les fonctions de la station de base (1), les fonctions de la station de base (1) comprenant de préférence une fonction de router ISDN ainsi qu'une fonction de connexion LAN.

7. Procédé selon l'une des revendications précédentes, **caractérisée en ce que** un ou plusieurs des appareils suivants sont considérés en tant que stations d'utilisateur :
PC, imprimante, scanner, télécopieur, appareil photo, récepteur de télévision, set-top box, module de contrôle, téléphone portable, router.

8. Procédé selon l'une des revendications précédentes, **caractérisée en ce que** chacune des stations d'utilisateur est équipée avec un module radio (14, 12) incluant le protocole de transmission nécessaire au standard radio à courte portée utilisé.

9. Procédé selon l'une des revendications précédentes, **caractérisée en ce que** la station de base est formée par un PC avec un module radio intégré (14) et un logiciel de protocole de transmission correspondant.

10. Procédé selon l'une des revendications précédentes, **caractérisée en ce que** le message d'enregistrement comprend des informations sur les dispositifs de communication et les fonctions incluant le numéro de version de la station d'utilisateur émettrice.

11. Procédé selon l'une des revendications précédentes, **caractérisée en ce que** des icônes, qui symbolisent les ressources du réseau, sont affichées dans les stations d'utilisateur sur un dispositif d'affichage en fonction de la vue d'ensemble des utilisateurs du réseau ou le plan de ressources.

12. Procédé selon l'une des revendications précédentes, **caractérisée en ce que** les stations d'utilisateur communiquent des modifications de leur statut fonctionnel à la station de base et la station de base transmet les modifications fonctionnelles correspondantes aux stations d'utilisateur restantes au moyen d'un message de pager afin d'actualiser le plan de ressources.

13. Procédé selon l'une des revendications précédentes, **caractérisée en ce que** la station de base surveille la sortie de chacune des stations d'utilisateur de la cellule radio et communique ces modifications aux stations d'utilisateur restantes.

14. Procédé selon l'une des revendications précédentes, **caractérisée en ce que** les stations d'utilisateur peuvent entrer dans un mode de veille et être réactivées par la station de base ou une autre station d'utilisateur par le biais d'un appel d'activation.

15. Procédé selon l'une des revendications précédentes, **caractérisée en ce que** le logiciel gestionnaire transmis par une station d'utilisateur est auto-installable.

16. Procédé selon l'une des revendications précédentes, **caractérisée en ce que** une modification des états fonctionnels des stations d'utilisateur est enregistrée par une demande cyclique de la station d'utilisateur par la station de base ou par des messages actifs des stations d'utilisateur à la station de base.

17. Procédé selon l'une des revendications précédentes, **caractérisée en ce que** le logiciel de communication est envoyé lors de la première demande du service correspondant par une station d'utilisateur nouvellement enregistrée à la station d'utilisateur demandant le service.
